# EUROPÄISCHE PATENTSCHRIFT

(11) **EP 0 837 381 B1**
(45) Veröffentlichungstag und Bekanntmachung des Hinweises auf die Patenterteilung: **06.03.2002**
(21) Anmeldenummer: 97117886.8
(22) Anmeldetag: 15.10.1997
(51) Int. Cl.: G05D 23/19, G05B 6/02, B60H 1/22

(54) **Elektrische Heizung**
Electrical heating
Chauffage électrique

(30) Priorität: 15.10.1996 DE 19642443; 15.10.1996 DE 19642442
(43) Veröffentlichungstag der Anmeldung: 22.04.1998
(73) Patentinhaber: David & Baader DBK Spezialfabrik elektrischer Apparate und Heizwiderstände GmbH, D-76870 Kandel (DE); Alcatel SEL Aktiengesellschaft, 70435 Stuttgart (DE)
(72) Erfinder: Beetz, Klaus, Dr., 76187 Karlsruhe (DE); Bohlender, Franz, 76870 Kandel (DE); Feustel, Hans-Peter, 91154 Roth (DE)
(74) Vertreter: Grünecker, Kinkeldey, Stockmair & Schwanhäusser Anwaltssozietät

(56) Entgegenhaltungen:
- EP-A- 0 057 477
- GB-A- 2 151 820
- US-A- 3 659 186
- US-A- 3 710 139
- US-A- 4 151 589

## Beschreibung

Die Erfindung bezieht sich auf eine elektrische Heizung mit wenigstens zwei Heizwiderständen, deren Heizleistung von einer Regeleinrichtung einstellbar ist.

Elektrische Heizungen oder Heizsysteme werden beispielsweise in Kraftfahrzeugen für unterschiedliche Anwendungen benötigt, zum Beispiel zur Temperierung (Erwärmung) der Raumluft, zur Vorheizung des Kühlwassers bei wassergekühlten Motoren, zum Vorglühen der Zündkerzen bei selbstzündenden Brennkraftmaschinen, zur Erwärmung von Kraftstoff (Diesel) etc. Üblicherweise bestehen derartige Heizsystem aus einer Heizung mit mindestens einer Heizstufe, die jeweils mindestens ein (beispielsweise als Heizwiderstand ausgebildetes) Heizelement zur Erzeugung einer bestimmten Heizleistung aufweisen sowie aus einer Kontrolleinheit zur Überwachung des zeitlichen Ablaufs und zur Vorgabe der Heizleistung; Heizung und Kontrolleinheit sind als getrennte Module (Funktionseinheiten) ausgebildet und an verschiedenen Stellen innerhalb des Kraftfahrzeugs angeordnet.

Nachteilig hierbei ist, dass zum einen eine Vielzahl von Verbindungsleitungen zwischen Heizung und Kontrolleinheit erforderlich ist (verbunden mit Platzbedarf, Kosten, EMV-Problematik) und dass zum anderen die in der Kontrolleinheit entstehende Verlustleistung extra abgeführt werden muss.

Die Kontrolleinheit kann mittels einer Steuerung der verschiedenen Regler realisiert werden, die beim Auftreten einer Regelabweichung bzw. Regeldifferenz ein unterschiedliches Regelverhalten bewirken; beispielsweise sind Proportionalregler, Integralregler, Differentialregler, Linearregler oder schaltbare Stufenregler gebräuchlich. Um die Belastung der Regeleinrichtung zu reduzieren, kann diese aus mehreren Reglern aufgebaut werden, die üblicherweise als schaltbare Stufenregler ausgebildet sind und beispielsweise durch Schaltvorgänge aktiviert und deaktiviert werden. Problematisch hierbei ist (insbesondere bei Stufenreglern) die Abgrenzung der Wirkungsbereiche der verschiedenen Regler, d.h. der Übergang zwischen den Regelbereichen der Regler ist nicht eindeutig definiert; die folge hiervon sind Störungen der Regelung bzw. des Regelverhaltens (Auftreten von Totbereichen, Überlappungen, Hysteresen, undefinierten Zuständen etc.) und EMV-Störungen, zu deren Reduzierung kostenintensive Bauelemente erforderlich sind.

Eine Schaltung zur Unterscheidung unterschiedlicher Eingangsspannungswerte ist in US 3 710 139 beschrieben. Die Schaltung besteht aus ineinander verschachtelten, mehrfach rückgekoppelten Verstärkern. Von der Schaltung werden so viele Ausgangssignale ausgegeben, wie unterschiedliche Eingangsspannungen unterschieden werden können. Jedes der Ausgangssignale hat im wesentlichen einen binären Charakter und nimmt einen hohen oder niedrigen Ausgangswert in Abhängigkeit davon an, ob der Eingangswert unter- oder oberhalb des dem jeweiligen Ausgang zugeordneten Wertes liegt.

Eine Überwachungseinrichtung für ein Gleichstromübertragungssystem ist in US 3 659 186 dargestellt. Zur Überwachung eines über eine Übertragungsleitung 9 geleiteten Stroms wird ein von einem Detektor 11 erfasster Wert mit einem vorgegebenen Stromwert verglichen. Um diesen Vergleich von kleinen Schwankungen unabhängig zu machen, ist ein Filter der Vergleichsmessung vorgeschaltet. Ein solches Filter kann jedoch das kurzzeitige Fliessen gefährlich großer Ströme nicht verhindern. Um solche großen Ausschläge dennoch rechtzeitig erfassen zu können, ist eine zusätzliche "Schutzschaltung" vorgesehen. Diese Schutzschaltung vergleicht jeweils den vom Detektor 11 erfassten Stromwert mit einer vorgegebenen oberen Schwelle und einer vorgegebenen unteren Schwelle.

Der Erfindung liegt die Aufgabe zugrunde, eine einfache elektrische Heizung mit geringer Verlustleistung anzugeben.

Diese Aufgabe wird erfindungsgemäß durch die Merkmale des Patentanspruchs 1 gelöst.

Vorteilhafte Weiterbildungen des Verfahrens sind Bestandteil der weiteren Patentansprüche.

Beim vorgestellten Heizsystem ist die mindestens zwei Heizstufen aufweisenden Heizung als Regelstrecke eines Regelkreises ausgebildet, die zusammen mit der Regeleinrichtung des Regelkreises in ein gemeinsames Gehäuse integriert wird. Bei dem Regelkreis soll die Heizleistung der Heizung (d.h. der Heizstufe/n) als Regelgröße geregelt werden; jedoch wird anstelle der eigentlichen Regelgröße Heizleistung oftmals vorzugsweise eine die Heizleistung bestimmende Größe als tatsächliche Regelgröße herangezogen, d.h. es wird entweder der Strom durch die Heizstufe/n bzw. die Heizelemente (der Heizstrom) oder die Spannung an der/n Heizstufe/n bzw. den Heizelementen (die Heizspannung) geregelt. Bei diesem (beispielsweise spannungsgesteuerten) Regelkreis wird der Sollwert der die Heizleistung bestimmenden Größe (beispielsweise die Heizspannung) vorgegeben, dieser Sollwert mit dem Istwert der die Heizleistung bestimmenden Größe (beispielsweise die Heizspannung) verglichen, und Abweichungen zwischen Sollwert und Istwert (die Regelabweichung bzw. Regeldifferenz) selbsttätig durch Rückkopplung innerhalb des Regelkreises minimiert.

Als Regeleinrichtung wird vorzugsweise mindestens ein Linearregler eingesetzt; derartige Linearregler (stetige Regler) besitzen in ihrem Regelverlauf keine Unstetigkeiten (im Gegensatz zu einem geschalteten Regler). Beim Einsatz mehrerer Linearregler werden diese derart kaskadiert parallelgeschaltet, daß immer nur jeweils einer der Linearregler im Linearbetrieb betrieben wird und somit das Regelverhalten bestimmt.

Der Sollwert der Regelgröße Heizleistung bzw. der die Heizleistung bestimmenden Größe kann entweder mittels einer Führungsgröße variiert werden, die beispielsweise mittels eines dem Regelkreis zugeführten externen Eingangssignals generiert wird oder aber mittels eines (beispielsweise im Regelkreis erzeugten) direkten Steuersignals für die Heizleistung bzw. für die die Heizleistung bestimmende Größe.

Die die Regelgröße Heizleistung bzw. die die Heizleistung bestimmende Größe erzeugenden Heizelemente der Heizstufe/n der Heizung (Regelstrecke) sind vorzugsweise als Heizwiderstände ausgebildet.

Vorzugsweise sind die Halbleiterbauelemente der Regeleinrichtung, insbesondere deren Leistungstransistoren, zur Reduzierung des thermischen Widerstands auf einem gemeinsamen Trägerkörper mit hoher Wärmeleitfähigkeit (beispielsweise auf einer Kupferplatte) aufgebracht.

Das Heizsystem kann zur Beheizung von an einen Kreislauf gebundenen Medien, d.h. der in einem Wärmekreislauf und/oder in einem Kühlkreislauf des Kraftfahrzeugs befindlichen Medien (beispielsweise Wasser, Luft, Öl, etc.) verwendet werden (beispielsweise für die Kühlwasserbeheizung des Kraftfahrzeugs); alternativ auch zur Beheizung von nicht an einen Kreislauf gebundenen Medien (beispielsweise für die Innenraumbeheizung des Kraftfahrzeugs).

Das vorgestellte Heizsystem vereinigt mehrere Vorteile in sich:

Durch die Integration des Regelkreises aus Regeleinrichtung (Linearregler) und Regelstrecke (Heizung aus Heizstufe/n mit Heizelementen) in einem Gehäuse
- ist das Heizsystem als kompakte funktionsfähige Einheit realisierbar,
- ist keine Abstimmung zwischen der Heizung und einer Kontrolleinheit erforderlich,
- besteht nur ein geringer Aufwand für externe Anschlüsse, die Heizelemente der Heizstufe/n müssen seitens des Anwenders nicht mehr angeschlossen werden;
- wird die Verlustleistung (der Halbleiterbauelemente) der Regeleinrichtung zum Heizen mitverwendet, wodurch man außerdem einen linearen Zusammenhang zwischen dem Heizstrom und der Heizleistung erhält.

Durch die Realisierung der Regeleinrichtung mittels eines Linearreglers oder mittels mehrerer (parallelgeschalteten) Linearregler, von denen jeweils nur einer im Linearbetrieb betrieben wird
- werden Schaltvorgänge vermieden und demzufolge auch die durch Schaltvorgänge bedingten Störungen der Regelung (Auftreten von Totbereichen Überlappungen, Hysteresen, undefinierten Zuständen etc.),
- werden EMV-Störungen weitgehend vermieden, so daß keine kostenintensiven Bauelemente zur Beseitigung der EMV-Problematik benötigt werden.

Durch den Aufbau der Halbleiterbauelemente der Regeleinrichtung auf einem gemeinsamen Trägerkörper mit hoher Wärmeleitfähigkeit ist eine Reduzierung des thermischen Widerstands der Halbleiterbauelemente der Regeleinrichtung (beispielsweise der Linearregler) und damit der Temperaturbelastung der Halbleiterbauelemente der Regeleinrichtung gegeben.

Im folgenden ist das erfindungsgemäße Heizsystem für das Ausführungsbeispiel der Kühlwasserbeheizung eines Kraftfahrzeugs im Zusammenhang mit der Zeichnung (Figuren 1 bis 7) beschrieben. Es zeigen:
- Figur 1: ein Prinzipschaltbild zur Veranschaulichung der Regelung der elektronischen Heizung,
- Figur 2: ein Prinzipschaltbild des Regelkreises,

- Figur 3: ein Ausführungsbeispiel des Regelkreises,
- Figur 4: eine perspektivische Ansicht des Heizsystems,
- Figur 5: eine Schnittzeichnung des in einen Kühlkreislauf (beispielsweise den Kühlwasserkreislauf) des Kraftfahrzeugs integrierten Heizsystems,
- Figur 6: eine Anordnung der Halbleiterbauelemente der Regeleinrichtung, und
- Figur 7: ein Diagramm zur Veranschaulichung des Regelverhaltens.

Die Heizleistung der Heizelemente des Heizsystems soll sowohl dynamisch als auch statisch mit minimalem Fehler eingestellt bzw. vorgegeben werden.

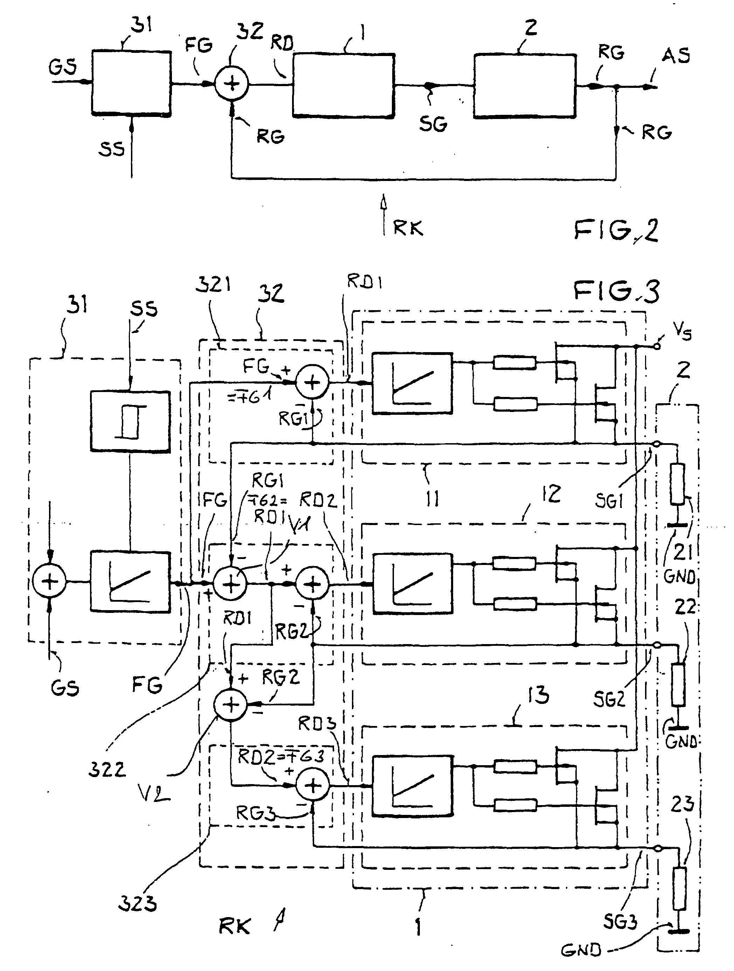

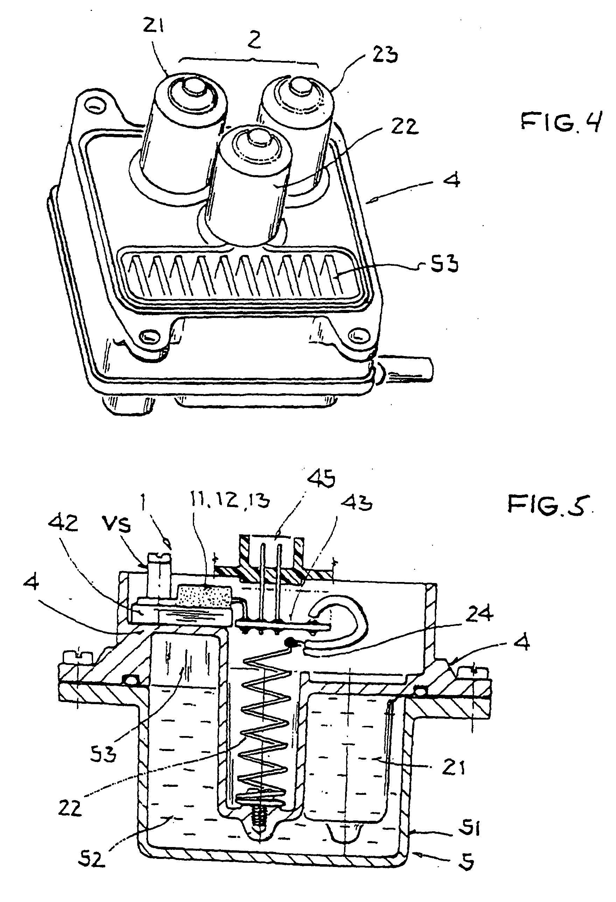

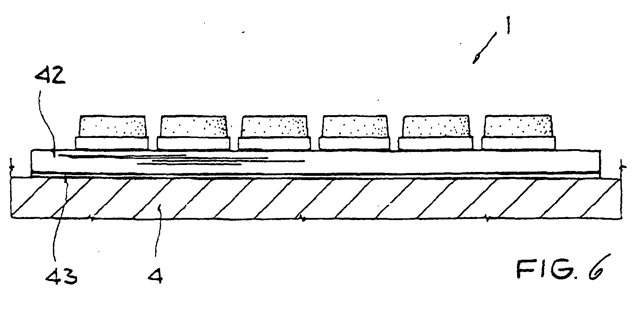

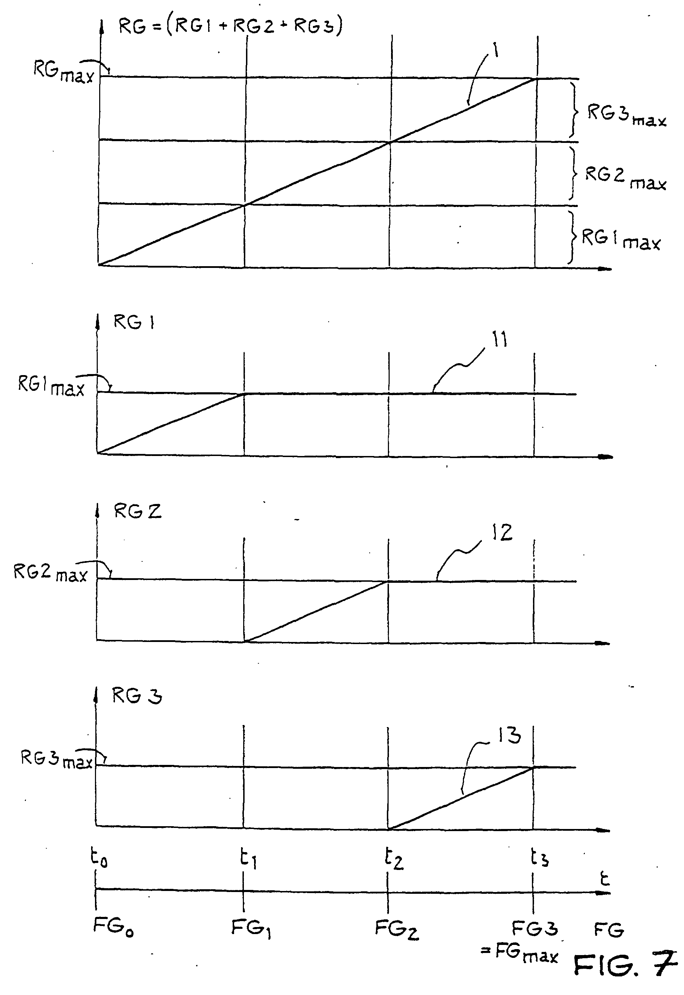

Gemäß Figur 2 wird hierzu innerhalb des spannungsgesteuerten Regelkreises RK aus Regeleinrichtung 1, Regelstrecke 2 (Heizung aus mindestens einer Heizstufe mit jeweils mindestens einem Heizelement) und Sollwerteinsteller 31 die Heizleistung als Regelgröße RG mittels der Stellgröße SG Spannungsabfall an der Heizung 2 (Heizspannung) geregelt. Hierzu wird über den beispielsweise mittels des Steuersignals SS aktivierbaren/deaktivierbaren Sollwerteinsteller 31 (beispielsweise mittels eines externen Steuersignals GS) eine Führungsgröße FG erzeugt und diese als Sollwertvorgabe der Regelgröße RG dem Vergleicher 32 zugeführt ; vom Vergleicher 32 wird diese Sollwertvorgabe der Regelgröße mit dem (rückgeführten) Istwert der Regelgröße RG verglichen und anhand dieses Vergleichs die Regeldifferenz RD bzw. die Regelabweichung gebildet. Diese Regeldifferenz RD bzw. Regelabweichung wird der Regeleinrichtung 1 (beispielsweise mindestens ein Linearregler) zugeführt und von dieser die Stellgröße SG Heizspannung generiert. Mittels der Stellgröße SG wird die Regelstrecke 2 (Heizung) beaufschlagt und hierdurch von der Heizung 2 (den Heizstufen bzw. den Heizelementen der Heizstufen) eine bestimmte Heizleistung als (Istwert der) Regelgröße RG erzeugt. Die Heizleistung als Regelgröße RG wird zum einem am Ausgang des Regelkreises RK als Ausgangssignal AS ausgegeben (dem Kühlwasserkreislauf des Kraftfahrzeugs zugeführt) und hierdurch eine Heizung des Kühlwassers vorgenommen und zum andern in der Rückkopplungsschleife des Regelkreises RK dem Vergleicher 32 als Istwert zugeführt.

Anstelle der eigentlichen Regelgröße RG Heizleistung wird aus Gründen der Einfachheit als Regelgröße RG eine der beiden die Heizleistung bestimmende Größe verwendet, d.h. entweder der Strom durch die Heizung 2 bzw. die Heizstufen (Heizstrom) oder der Spannungsabfall an der Heizung 2 bzw. den Heizstufen (Heizspannung); wird beispielsweise die Heizspannung als Regelgröße RG verwendet, so ist in diesem Falle die Regelgröße RG mit der Stellgröße SG identisch.

Für ein vereinfachtes Heizungssystem ist zur Steuerung der Heizleistung ein einfacher Linearregler ohne einen Vergleicher 32 ausreichend.

Gemäß Figur 3 ist die Heizung 2 mittels dreier parallelgeschalteter, jeweils ein Heizelement aufweisenden Heizstufen 21, 22, 23 realisiert; die Heizelemente der Heizstufen 21, 22, 23 sind beispielsweise als Heizwiderstände ausgebildet und zwischen Versorgungsspannung Vₛ (beispielsweise + 12 V) und Bezugspotential GND geschaltet. Die Regeleinrichtung 1 ist mittels dreier parallelgeschalteter Linearregler 11, 12, 13 realisiert, wobei jede Heizstufe 21, 22, 23 bzw. jedes Heizelement mit dem Ausgang eines Linearreglers 11, 12, 13 verbunden ist und so mit einer bestimmten Stellgröße SG (SG1, SG2, SG3) als Spannungsabfall an der Heizstufe 21, 22, 23 bzw. dem Heizelement (Heizspannung) beaufschlagt wird. Die Heizleistung bzw. die Heizspannung als rückgeführte Regelgröße RG (RG1, RG2, RG3) wird dem Vergleicher 32 aus drei Vergleichselementen 321, 322, 323 zugeführt, wobei jedem Linearregler 11, 12, 13 ein Vergleichselement 321, 322, 323 zugeordnet ist; die Vergleichselemente 321, 322, 323 sind so ausgebildet, daß jeder Linearregler 11, 12, 13 mit einer bestimmten Regeldifferenz RD1, RD2, RD3 derart beaufschlagt wird, daß jeder Linearregler 11, 12, 13 einen anderen Regelbereich aufweist (es wird nur jeweils einer der Linearregler 11, 12, 13 im Linearbetrieb betrieben) und hierdurch eine kontinuierliche Regelung der Heizleistung ohne Totbereiche, Überlappungen oder Unstetigkeiten (Hysterese, Sprungstellen) im Regelverlauf erfolgt.

Dem Linearregler 11 für den niedrigsten Regelbereich wird die von dem Sollwerteinsteller 31 erzeugte Führungsgröße FG zugeführt. Mit dem anschließenden, nächst höheren Regelbereich soll erst dann eine zusätzliche Heizleistung bewirkt werden, wenn die von der Führungsgröße FG vorgegebene Heizleistung von dem darunterliegenden Regelbereich nicht mehr bewirkt werden kann. Um für den nächst höheren Regler eine entsprechende Führungsgröße zu erzeugen, wird die Differenz aus der von dem Sollwerteinsteller 31 vorgegebenen Führungsgröße FG und der in Abhängigkeit von dieser Führungsgröße FG von dem ersten Regler 11 erzeugten Stellgröße SG1 gebildet. Sobald der erste Regler die Obergrenze seines Regelbereichs erreicht hat, entsteht zwischen der Führungsgröße FG und der Stellgröße SG1 eine Differenz RD1, die von dem ersten Regler 11 nicht mehr ausgeglichen werden kann. Diese Differenz RD1, die in dem Vergleichselement V1 bestimmt wird, wird als Führungsgröße dem Regler 12 des anschließenden Regelbereichs zugeführt. Ebenso kann der Regler 12 bei Erreichen der Obergrenze seines Regelbereichs eine weitere Zunahme der Heizleistung nicht mehr bewirken. Nach demselben Prinzip, nach dem für den Regler 12 eine Führungsgröße RD1 erzeugt wurde, wird auch für den Regler 13 des nächstfolgenden Regelbereichs eine Führungsgröße ermittelt. Dazu wird aus der dem Regler zugeleiteten Differenz RD1 und der als Antwort auf diese Größe vom Regler 12 erzeugten Stellgröße SG2 im Vergleichselement V2 die Differenz RD2 ermittelt. Diese Differenz RD2 wird als Führungsgröße dem Regler 13 zugeleitet. Auf diese Weise bewirkt der Regler 13 erst dann eine zusätzliche Heizleistung, wenn diese über den Sollwerteinsteller 31 angefordert wird, von den Reglern 11 und 12 mit den jeweils angeschlossenen Heizwiderständen 21 und 22, aber nicht mehr bewirkt werden kann.

Diesem Prinzip entsprechend läßt sich der gesamte Heizbereich in eine beliebige Zahl von Teil-Regelbereichen aufteilen, um so beispielsweise die mittlere Reglerverlustleistung niedrig zu halten. Die von außen vorgegebene Soll-Heizleistung wird dazu zunächst dem niedrigsten der Regelbereiche zugeführt. Für einen nahtlosen, d.h. kontinuierlichen Übergang der Regelbereiche wird den Reglern für die nächst höheren Regelbereiche jeweils nur die Differenz aus der dem jeweils nächst niedrigen Regler zugeführten Sollgröße und der von diesem daraufhin erzeugten Stellgröße zugeführt.

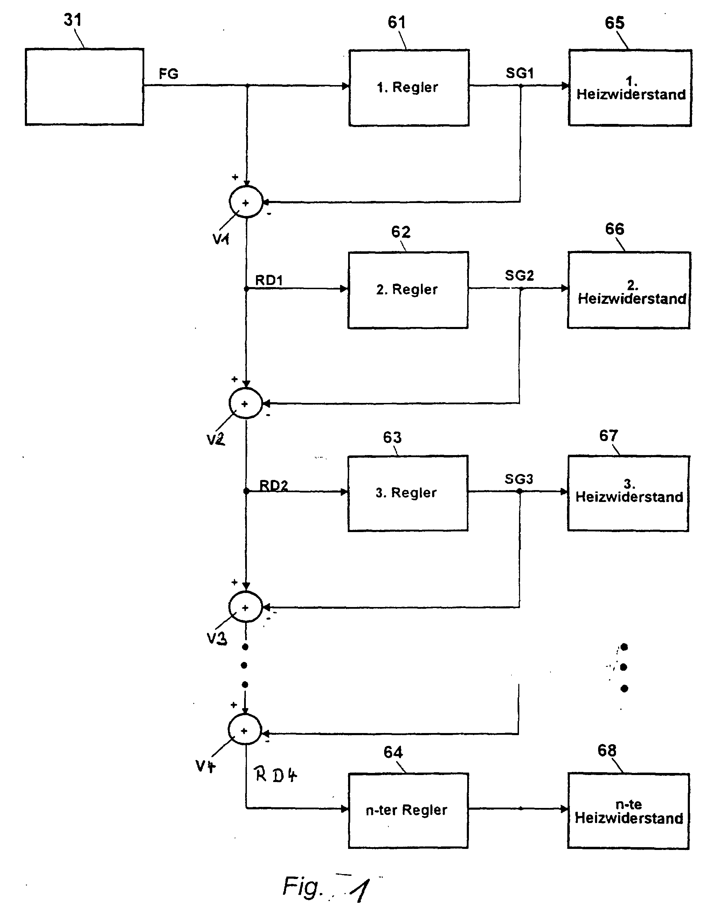

Ein einfacheres Schaltbild zur Verdeutlichung dieses Prinzips ist in Fig. 1 dargestellt. In Fig. 1 sind nur die wesentlichen Elemente eines solchen Heizsystems zur Steuerung von übergangslosen Regelbereichen wiedergegeben.

Die von außen (z.B. vom Sollwerteinsteller 31) vorgegebene Soll-Heizleistung FG wird dem ersten Regler 61 zugeführt. In Abhängigkeit von der Führungsgröße FG erzeugt der erste Regler 61 eine Stellgröße SG1, die der mit diesem Regler verbundenen ersten Heizstufe 65 zugeleitet wird. Eine Differenz, die entsteht, wenn der erste Regler 61 mit seiner Stellgröße SG1 einer weiteren Erhöhung der Führungsgröße FG durch den Sollwerteinsteller 31 nicht mehr folgen kann, wird im Vergleichselement V1 gebildet. Diese Differenz RD1 wird dem zweiten Regler 62 zugeführt. Der zweite Regler erzeugt in Abhängigkeit von der ihm zugeleiteten Differenz RD1 eine Stellgröße SG2, welche die Heizleistung der zweiten Heizstufe 66 steuert. Zur Steuerung des dritten Reglers 63 wird die Differenz aus der dem zweiten Regler 62 zugeleiteten Differenz RD1 und der von dem zweiten Regler 62 in Abhängigkeit von der Differenz RD1 erzeugten Stellgröße SG2 gebildet und dem dritten Regler 63 als Führungsgröße zugeleitet. Auch der dritte Regler 63 erzeugt in Abhängigkeit von der Differenz RD2 eine Stellgröße SG3, um die Heizleistung des dritten Heizwiderstandes 67 zu steuern. Aus der Differenz RD2 und der Stellgröße SG3 wird im Vergleicher V3 eine weitere Differenz gebildet, bis abschließend für den letzten Regler 64 mit der angeschlossenen Heizstufe 68 die Differenz RD4 im Vergleicher V4 gebildet wird.

Die die Sollwertvorgabe bestimmende Führungsgröße FG wird in Figur 3 mittels des Sollwerteinstellers 31 beispielsweise in Abhängigkeit des Auslastungsgrads des Generators des Kraftfahrzeugs generiert; beispielsweise wird die Führungsgröße FG und damit die Sollwertvorgabe für die Heizleistung in Abhängigkeit der vom Generator noch zur Verfügung stellbaren Ausgangsleistung mittels eines extern zugeführten Generatorsignals GS variiert - beispielsweise wird die Heizleistung so geregelt, daß der Generator kurz vor seinem Leistungsmaximum betrieben wird (beispielsweise bei 95 % der maximalen Leistung). Mittels eines dem Sollwerteinsteller 31 zugeführten Steuersignals SS wird der Regelkreis RK freigegeben oder gesperrt (die Regelung aktiviert oder deaktiviert). Da die als Heizelemente verwendeten Heizwiderstände der Heizstufen 21, 22, 23 gegen Bezugspotential GND (Masse) geschaltet sind und die über diesen Heizwiderständen abfallende Spannung (die Heizspannung) als Stellgröße verwendet wird, sind keine Strommeßwiderstände erforderlich; weiterhin ist die Regelung auch unempfindlich gegenüber Toleranzen der Widerstandswerte, der Regelkreis RK kann somit ohne Abgleich auch mit hochohmigen Heizwiderständen der Heizstufen 21, 22, 23 und mit unterschiedlichen Widerstandswerten der Heizwiderstände der Heizstufen 21, 22, 23 realisiert werden.

Die parallelgeschalteten kaskadierten Linearregler 11, 12, 13 der Regeleinrichtung 10 werden mit unterschiedlichen, anhand der Differenz aus jeweiliger Führungsgröße FG1, FG2, FG3 (Sollwert) und jeweiliger Regelgröße RG1, RG2, RG3 (Istwert) generierten Regeldifferenzen RD1, RD2, RD3 beaufschlagt:
der erste Linearregler 11 mit der Regeldifferenz RD1 als Differenz aus der Führungsgröße FG als Führungsgröße FG1 und dem Istwert RG1 der Regelgröße RG des ersten Linearreglers 11,
der zweite Linearregler 12 mit der Regeldifferenz RD2 als Differenz aus der Regeldifferenz RD1 des ersten Linearreglers 11 als Führungsgröße FG2 (Führungsgröße FG minus Istwert RG1 der Regelgröße RG des ersten Linearreglers 11) und dem Istwert RG2 der Regelgröße RG des zweiten Linearreglers 12,
der dritte Linearregler 13 mit der Regeldifferenz RD3 als Differenz aus der Regeldifferenz RD2 des zweiten Linearreglers 12 als Führungsgröße FG3 (Führungsgröße FG minus Istwert RG1 der Regelgröße RG des ersten Linearreglers 11 minus Istwert RG2 der Regelgröße RG des zweiten Linearreglers 12) und dem Istwert RG3 der Regelgröße RG des dritten Linearreglers 13.

Der Maximalwert der Führungsgröße FG wird anhand der Summe der Regelgrenzen der einzelnen Linearregler 11, 12, 13 und damit anhand des Maximalwerts der Regelgröße RG vorgegeben. Die Führungsgröße FG wird mittels des Sollwerteinstellers 31 beispielsweise in Abhängigkeit von dem extern zugeführten Steuersignals GS variiert. Mittels eines dem Sollwerteinsteller 31 zugeführten Steuersignals SS wird der Regelkreis 1 freigegeben oder gesperrt (die Regelung aktiviert oder deaktiviert).

In der Figur 7 ist der zeitliche Verlauf der Regelgrößen RG1, RG2, RG3 der einzelnen Linearregler 11, 12, 13 der Regeleinrichtung 1 und der zeitlich Verlauf der Regelgröße RG (Gesamtregelverlauf) der Regeleinrichtung 1 bei einer von Null beginnenden kontinuierlichen Erhöhung der Führungsgröße FG bis zu ihrem Maximalwert FGₘₐₓ dargestellt.

Aufgrund der Vorgabe unterschiedlicher Regeldifferenzen RD1, RD2, RD3 werden die parallelgeschalteten kaskadierten Linearregler 11, 12, 13 der Regeleinrichtung 1 bei dieser kontinuierlichen Erhöhung der Führungsgröße FG sukzessive aktiviert und bestimmen hierdurch auch sukzessive den Verlauf der als Summe der Regelgrößen RG1, RG2, RG3 der Linearregler 11, 12, 13 gebildeten Regelgröße RG (RG = RG1 + RG2 + RG3):
zum Zeitpunkt t₀ (hier erreicht die Führungsgröße FG den Schwellwert FG₀) wird der erste Linearregler 11 aktiviert
bei einer Erhöhung der Führungsgröße FG (die Führungsgröße FG überschreitet den Schwellwert FG₀) wird der Gesamtregelverlauf (die Regelgröße RG) alleine vom ersten Linearregler 11 (Regelgröße RG1) bestimmt, der zweite Linearregler 12 und der dritte Linearregler 13 sind deaktiviert, da die Regeldifferenz RD1 des ersten Linearreglers 11 Null beträgt,
   zum Zeitpunkt t₁ (hier erreicht die Führungsgröße FG den Wert FG₁) wird die Regelgrenze RG1ₘₐₓ des ersten Linearreglers 11 erreicht (der Maximalwert RG1ₘₐₓ der Regelgröße RG1 des ersten Linearreglers 11) und der erste Linearregler 11 ausgesteuert; hierdurch wird der zweite Linearregler 12 aktiviert,
   bei einer Erhöhung der Führungsgröße FG (die Führungsgröße FG überschreitet den Wert FG₁) wird die Regeldifferenz RD1 des ersten Linearreglers 11 von Null verschieden und daher der Gesamtregelverlauf (die Regelgröße RG) vom ersten Linearregler 11 (Regelgröße RG1) und vom zweiten Linearregler 12 (Regelgröße RG2) bestimmt (der zweite Linearregler 12 übernimmt den vom ersten Linearregler 11 nicht mehr regelbaren Anteil der Regelgröße RG); der dritte Linearregler 13 ist deaktiviert, da die Regeldifferenz RD2 des zweiten Linearreglers 12 Null ist,
   zum Zeitpunkt t₂ (hier erreicht die Führungsgröße FG den Wert FG₂) wird die Regelgrenze RG2ₘₐₓ des zweiten Linearreglers 12 erreicht (der Maximalwert RG2ₘₐₓ der Regelgröße RG2 des zweiten Linearreglers 12) und der zweite Linearregler 12 ausgesteuert; hierdurch wird der dritte Linearregler 13 aktiviert
   bei einer Erhöhung der Führungsgröße FG (die Führungsgröße FG überschreitet den Wert FG₂) wird die Regeldifferenz RD2 des zweiten Linearreglers 12 von Null verschieden und daher der Gesamtregelverlauf (die Regelgröße RG) vom ersten Linearregler 11 (Regelgröße RG1), vom zweiten Linearregler 12 (Regelgröße RG2) und vom dritten Linearregler 13 (Regelgröße RG3) bestimmt (der dritte Linearregler 13 übernimmt den vom ersten Linearregler 11 und vom zweiten Linearregler 12 nicht mehr regelbaren Anteil der Regelgröße RG),
   zum Zeitpunkt t₃ (hier erreicht die Führungsgröße FG den Wert FG₃ bzw. ihren Maximalwert FGₘₐₓ) wird die Regelgrenze RG3ₘₐₓ des dritten Linearreglers 13 erreicht (der Maximalwert RG3ₘₐₓ der Regelgröße RG3 des dritten Linearreglers 13) und damit auch die Regelgrenze RGₘₐₓ der Regeleinrichtung 10 (der Maximalwert Rgₘₐₓ der Regelgröße RG).

Wie der Figur 7 zu entnehmen ist, wird jeweils nur einer der Linearregler 11, 12, 13 der Regeleinrichtung 1 im Linearbetrieb betrieben, so daß bei einer Variation der Führungsgröße FG eine kontinuierliche Regelung der Regelgröße RG ohne Unstetigkeiten (Hysterese, Sprungstellen), Totbereiche oder Überlappungen erfolgt.

Die Werte FG₁, FG₂ und FG₃ der Führungsgröße FG sind vom Aufbau bzw. Typ des jeweiligen Reglers abhängig und ergeben sich dadurch, daß der bis dort wirksame Regler seinen vorgegebenen Sollwert nicht mehr ausregeln kann (d.h. seine Reglergrenze erreicht).

Gemäß Figur 4 mit einer perspektivischen Darstellung des Heizsystems ist der Regelkreis RK aus (der nicht sichtbaren) Regeleinrichtung 1 und der Heizung 2 (Heizstufen 21, 22, 23) in einem Gehäuse 4 integriert. Die Rippen 53 dienen zur Vergrößerung der Oberfläche an der Stelle, wo die Verlustleistung der Leistungs-Halbleiterbauelemente der Regeleinrichtung 1 entsteht und damit zur Erhöhung der Heizwirkung. Der Anschluß des Regelkreises RK für das Bezugspotential GND (der Masseanschluß) kann über das Gehäuse 4 geführt werden, so daß außer den Signalleitungen nur der Anschuß für die Versorgungsspannung Vₛ vorgesehen werden muß.

Gemäß Figur 5 ist das Gehäuse 4 des Heizsystems zur definierten Vorheizung des (Kühl)Mediums 52 des Kühlkreislaufs 5 eines (beispielsweise wassergekühlten) Kraftfahrzeugs derart in der Aufnahmevorrichtung 51 des Kühlkreislaufs 5 angeordnet, daß die Heizung 2 mit den Heizstufen 21, 22, 23 bzw. Heizelementen ins Kühlmedium 52 (beispielsweise Wasser) eintaucht und somit vom Kühlmedium (52) umströmt wird. Das Gehäuse 4 weist ein Anschlußteil 45 für Signalleitungen auf, mittels dem dem Heizsystem externe Signale zugeführt werden können (beispielsweise das Steuersignal SS oder das Generatorsignal GS) oder vom Heizsystem Ausgangssignale zur Verfügung gestellt werden. Die Halbleiterbauelemente der Regeleinrichtung 1 (beispielsweise der Linearregler 11, 12, 13), insbesondere die Leistungs-Halbleiterbauelemente (beispielsweise Leistungstransistoren) sind auf einem gemeinsamen gut wärmeleitenden Trägerkörper 42 (beispielsweise eine Kupferplatte) aufgebracht, der oberhalb der Rippen 53 angeordnet ist; die Verbindung zwischen (den Halbleiterbauelementen) der Regeleinrichtung 1 und (den Heizelementen 21, 22, 23) der Heizstufe 2 erfolgt mittels mindestens einer Kontaktverbindung 24.

Da die Heizelemente der Heizstufen 21, 22, 23 (die Heizwiderstände) gegen Bezugspotential GND (Masse) geschaltet sind und die Gehäuse der Leistungs-Halbleiterbauelemente (beispielsweise der Leistungstransistoren) der Regeleinrichtung 1 somit alle auf gleichem Potential (Versorgungsspannung Vₛ) liegen, können die Halbleiterbauelemente der Regeleinrichtung 1 auf einen gemeinsamen Trägerkörper 42 aufgebracht werden. Gemäß Figur 6 ist dieser gemeinsame Trägerkörper 42 auf dem Gehäuse 4 (oberhalb der Rippen 53) angeordnet; zwischen Trägerkörper 42 und Gehäuse 4 ist eine Isolationsschicht 43 zur elektrischen Isolation von Trägerkörper 42 und Gehäuse 4 vorgesehen. Da immer nur jeweils einer der Linearregler 11, 12, 13 im Linearbetrieb betrieben wird (und daher nur bei diesem Linearregler eine große Verlustleistung entsteht), die jeweils anderen Linearregler 11, 12, 13 dagegen entweder deaktiviert sind (keine Verlustleistung) oder im Sättigungsbetrieb betrieben werden (verbunden mit einer geringen Verlustleistung), wird durch den gemeinsamen Trägerkörper 42 der wirksame thermische Widerstand für den jeweiligen Linearregler 11, 12, 13 im Linearbetrieb entsprechend der Anzahl der vorgesehenen Linearregler 11, 12, 13 der Regeleinrichtung 1 und damit die Temperaturbelastung der Halbleiterbauelemente (insbesondere der Leistungstransistoren) der Regeleinrichtung 1 reduziert.

Das Heizsystem ist jedoch weder auf Kraftfahrzeuge, noch auf das beschriebene Ausführungsbeispiel beschränkt, beispielsweise können die Heizelemente der Heizstufe auch mittels PTC-Elementen realisiert werden. Anstelle einer Kühlwasserbeheizung kann das Heizsystem auch für andere Anwendungsfälle im Kraftfahrzeug (entweder kreislaufgebunden oder nichtkreislaufgebunden) eingesetzt werden, beispielsweise für die Erwärmung der Luft (Innenraumbeheizung) oder zur Vorheizung von (Diesel)-Kraftstoff.

## Patentansprüche

1. Elektrische Heizung mit wenigstens zwei elektrischen Heizwiderständen, deren Heizleistung von einer Regeleinrichtung einstellbar ist, die Regeleinrichtung (1) weist eine Anzahl der Heizwiderstände entsprechende Anzahl von Reglern (11, 12, 13) auf, denen jeweils einer der elektrischen Heizwiderstände (21, 22, 23) zugeordnet ist, wobei der Regelbereich der Regeleinrichtung (1) auf die Regler (11, 12, 13) aufgeteilt ist und jedem der Regler (11, 12, 13) ein anderer Regelbereich zugeordnet ist.

2. Elektrische Heizung nach Anspruch 1,
**gekennzeichnet durch**
Vergleichselemente (V1, V2) mit jeweils zwei Eingängen und einem Ausgang,
wobei der Ausgang jedes Vergleichselements (V1, V2) mit dem Eingang eines der Regler (12, 13) mit Ausnahme des Reglers (11) für den niedrigsten Regelbereich verbunden ist, um dem jeweiligen Regler (12, 13) eine ermittelte Differenz (FG2, FG3) zuzuleiten,
wobei dem Minuendeneingang der Vergleichselemente (V1, V2) jeweils das Eingangssignal (FG1, FG2) des Reglers (11, 12)zugeleitet wird, dem der nächst niedrigere Regelbereich zugeordnet ist, und
wobei dem Subtrahenteneingang der Vergleichselemente (V1, V2) jeweils die vom Regler (11, 12) des nächst niedrigen Regelbereichs erzeugte Stellgröße (SG1, SG2) zugeleitet wird.

3. Elektrische Heizung nach einem der Ansprüche 1 oder 2,
**dadurch gekennzeichnet,**
**daß** jeder der Regler (11, 12, 13) einen Linearregler und ein Vergleichselement (321, 322, 323) umfaßt,
wobei das Vergleichselement (321, 322, 323) dem Linearregler (11, 12, 13) eine Regeldifferenz (RD1, RD2, RD3) aus der Führungsgröße (FG, FG2, FG3) und dem Istwert der resultierenden Regelgröße (RG1, RG2, RG3) zuleitet.

4. Elektrische Heizung nach Anspruch 3,
**dadurch gekennzeichnet,**
**daß** die Vergleichselemente (V1, V2) zur Aufteilung des Regelbereichs in die Vergleichselemente (321, 322, 323) der Regler integriert sind, die die ermittelte Regeldifferenz dem Linearregler (11, 12, 13) und als Führungsgröße (FG2, FG3) dem Regler des nächst höheren Regelbereichs zuleiten.

5. Elektrische Heizung nach einem der Ansprüche 1 bis 4,
**dadurch gekennzeichnet,**
**daß** die elektrische Heizung für den Kühlflüssigkeitskreislauf von Kraftfahrzeugen verwendet wird.

## Claims

1. An electric heating comprising at least two electric heating resistors, the heating power of each of which being adjustable by a control means, the control means (1) comprising a number of controllers (11, 12, 13), corresponding to the number of heating resistors each of the controllers (11, 12, 13) being assigned to an individual one of the electric heating resistors (21, 22, 23), wherein the control range of the control means (1) being distributed to said-controllers (11, 12, 13) and a different control range being assigned to each of the controllers (11, 12, 13).

2. an electric heating according to claim 1,
**characterized by**
comparator elements (V1, V2) each having two input terminals and one output terminal,
wherein the output terminal of each comparator element (V1, V2) is connected to the input terminal of one of the controllers (12, 13) except for the controller (11) for the lowest control range in order to supply the respective controller (12, 13) with a detected difference (FG2, FG3),
wherein the input signal (FG1, FG2) of the controller (11, 12) to which the lower next control range is associated is supplied to the minuend input terminal of the comparator elements (V1, V2), and
wherein the controlling variable (SG1, SG2) generated by the controller (11, 12) of the lower next control range is supplied to the subtrahend input terminal of the comparator elements (V1, V2).

3. An electric heating according to any one of claims 1 or 2,
**characterized in that**
each of the controllers (11, 12, 13) comprises a linear controller and a comparator element (321, 322, 323),
wherein the comparator element (321, 322, 323) supplies the linear controller (11, 12, 13) with a control difference (RD1, RD2, RD3) from the command variable (FG, FG2, FG3) and the actual value of the resulting controlled variable (RG1, RG2, RG3).

4. An electric heating according to claim 3,
**characterized in that**
the comparator elements (V1, V2) are integrated into the comparator elements (321, 322, 323) of the controllers for dividing the control range, which supply the detected control difference to the linear controller (11, 12, 13) and as command variable (FG2, FG3) to the controller of the higher next control range.

5. An electric heating according to any one of claims 1 to 4,
**characterized in that**
the electric heating is used for the circulatory cooling liquid system of motor vehicles.

## Revendications

1. Chauffage électrique, comportant au moins deux résistances chauffantes électriques, dont la puissance de chauffage est réglable par un dispositif de réglage, le dispositif de réglage (1) présente une pluralité de régulateurs (11, 12, 13) dont le nombre correspond à celui des résistances chauffantes, régulateurs à chacun desquels est associée l'une des résistances chauffantes électriques (21, 22, 23), la plage de régulation du dispositif de réglage (1) étant répartie sur les régulateurs (11, 12, 13), et une autre plage de régulation étant associée à chacun des régulateurs (11, 12, 13).

2. Chauffage électrique selon la revendication 1, **caractérisé par** des éléments comparateurs (V1, V2) ayant chacun deux entrées et une sortie;
la sortie de chaque élément comparateur (V1, V2) étant reliée à l'entrée d'un des régulateurs (12, 13) à l'exception du régulateur (11) prévu pour la plage de régulation la plus basse, afin d'amener au régulateur (12, 13) spécifique une différence (FG2, FG3) déterminée,
le signal d'entrée (FG1, FG2) du régulateur (11, 12) auquel est associée la plage de régulation immédiatement inférieure étant chaque fois amené à l'entrée inverseuse de signe des éléments comparateurs (V1, V2), et
la grandeur de réglage (SG1, SG2) générée par le régulateur (11, 12) chaque fois de la plage de régulation immédiatement inférieure étant chaque fois amenée à l'entrée soustractive des éléments comparateurs (V1, V2).

3. Chauffage électrique selon l'une des revendications 1 ou 2,
**caractérisé en ce que**
chacun des régulateurs (11, 12, 13) comprend un régulateur linéaire et un élément comparateur (321, 322, 323),
l'élément comparateur (321, 322, 323) amenant au régulateur linéaire (11, 12, 13) une différence de réglage (RD1, RD2, RD3) venant de la grandeur de guidage (FG, FG2, FG3) et de la valeur réelle de la grandeur de guidage (RG1, RG2, RG3) résultante.

4. Chauffage électrique selon la revendication 3,
**caractérisé en ce que**
les éléments comparateurs (V1, V2) prévus pour subdiviser la plage de régulation sont intégrés dans les éléments comparateurs (321, 322, 323) du régulateur, qui amènent la différence de réglage déterminée au régulateur linéaire (11, 12, 13) et, en tant que grandeur de guidage (FG2, FG3), au régulateur de la plage de réglage immédiatement supérieure.

5. Chauffage électrique selon l'une des revendications 1 à 4,
**caractérisé en ce que**
le chauffage électrique est utilisé pour le circuit de liquide de refroidissement de véhicules automobiles.
